# EUROPÄISCHE PATENTSCHRIFT

(11) **EP 3 887 124 B1**
(45) Veröffentlichungstag und Bekanntmachung des Hinweises auf die Patenterteilung: **20.08.2025**
(21) Anmeldenummer: 19817584.6
(22) Anmeldetag: 28.11.2019
(51) Int. Cl.: B29C 48/44, B29C 48/45, B29C 48/76, B29C 48/00, B29C 48/38, B29C 48/80

(54) **VERFAHREN ZUM AUFBEREITEN VON FESTEN KUNSTSTOFFPARTIKELN AUS EINEM POLYKONDENSAT MITTELS EINES MULTIROTATIONSSYSTEMS**
METHOD OF PROCESSING SOLID POLYMER PARTICLES OF A POLYCONDENSATE BY MEANS OF A MULTI-ROTATION SYSTEM
PROCÉDÉ DE TRAITEMENT DE PARTICULES DE MATIÈRE SYNTHÉTIQUE SOLIDES FORMÉES D'UN POLYCONDENSAT AU MOYEN D'UN SYSTÈME MULTI-ROTATION

(30) Priorität: 28.11.2018 DE 102018130102
(43) Veröffentlichungstag der Anmeldung: 06.10.2021
(73) Patentinhaber: Gneuss GmbH, 32549 Bad Oeynhausen (DE)
(72) Erfinder: GNEUSS, Daniel, Charlotte, NC 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2019/101020
(87) Internationale Veröffentlichungsnummer: WO 2020/108705

(56) Entgegenhaltungen:
- WO-A1-03/033240
- DE-A1- 102005 051 341
- DE-A1- 102017 111 275
- DE-B3- 102013 003 380
- US-A1- 2015 069 655
- US-B2- 9 061 442

## Beschreibung

Die Erfindung betrifft ein Verfahren zum Aufbereiten von festen Kunststoffpartikeln aus einem Polykondensat mittels eines Multirotationssystems.

Ein Grundproblem bei der Verarbeitung von Polykondensaten, insbesondere von hydrolysierbaren Kunststoffen wie PET, in einem Extrusionsprozess besteht darin, dass eine bestimmte Verweilzeit und ein bestimmter Wärmeeintrag pro Zeit erforderlich ist, um eine homogene Kunststoffschmelze zu erhalten, die weiter verarbeitet werden kann, dass aber andererseits genau dieser Wärmeeintrag während der Verweilzeit den hydrolytischen Abbau des Kunststoffs bewirkt, wenn dieser Feuchtigkeit enthält. Gerade bei Recyclingprozessen wäre aber eine vollständige Trocknung des Feststoffs vor Einleitung in den Extrusionsprozess unwirtschaftlich, so dass PET-Recyclingmaterial immer als feucht anzusehen ist. Deshalb wird fester Kunststoff, der Restfeuchte enthält, in einem Extruder eingezogen, aufgeschmolzen und entgast, um Wasser als Kondensat abzuführen und dadurch den hydrolytischen Abbau zu stoppen oder sogar eine viskositätserhöhende Umkehrreaktion in Gang zu setzen.

Eine wesentliche Verbesserung stellt in diesem Zusammenhang das in WO 2003 033 240 A1 beschriebene Multirotationssystem dar, das eine Extruderschnecke enthält, die zwischen einer Einzugs- und Meteringzone zum Einziehen und Aufschmelzen des Kunststoffs und einer Austragszone eine sogenannte Polyrotationseinheit umfasst. Diese besitzt einen gegenüber den anderen Zonen deutlich vergrößerten Durchmesser und außerdem mehrere rotierende Satellitenschnecken. Mit dem Multirotationssystem wird eine signifikante Erhöhung der Entgasungsleistung gegenüber Ein- und Doppelschneckensystem erreicht. Folglich kann die Verweilzeit der Kunststoffschmelze in der Polyrotationseinheit sehr kurz gehalten werden. Die Druckschrift DE 10 2005 051341 offenbart ein PET-Aufbereitungsverfahren mit einem Mehrschneckensystem.

Problematisch bleibt, dass bei höheren Feuchtigkeitsgehalten schon in der Meteringzone ein weitgehender hydrolytischer Abbau eingesetzt hat, der nachfolgend in der Polyrotationseinheit oftmals nicht mehr ausgeglichen werden kann. In jedem Fall kann das Potential, das die Polyrotationseinheit zur Erhöhung der intrinsischen Viskosität besitzt, im Gesamtprozess nur noch dafür benutzt werden, die vorhergehende Schädigung ganz oder teilweise wieder zu beseitigen, ohne jedoch eine über die Ausgangseigenschaften des bearbeiteten Kunststoffs hinaus gehende Verbesserung zu erreichen.

Um die Verweilzeit des Kunststoffs in der Meteringzone zu reduzieren, müsste die Schnecke schneller rotieren, wodurch andererseits mehr Scherung ausgeübt wird und sich der Wärmeeintrag pro Zeit erhöht. Das wiederum begünstigt den chemischen Abbauprozess und schädigt den Kunststoff durch Scherwirkung zusätzlich. Denkbar wäre zwar theoretisch auch, die Schneckendrehzahl niedrig zu halten und die Meteringzone kurz zu halten. Dann müsste aber die externe Heizleistung in der Extrudersektion stark erhöht werden, damit der Kunststoff überhaupt aufgeschmolzen wird, so dass sogar randseitige Verbrennungen des Kunststoffs eintreten können. Der einzige bekannte Ausweg aus dem beschriebenen Dilemma besteht in einer stärkeren Inline-Vortrocknung des eingezogenen Feststoffs vor der Aufgabe in den Extruder mit entsprechend nachteiligem Aufwand an Zeit und Kosten.

Die Aufgabe der Erfindung besteht somit darin, ein Verfahren zum Aufbereiten von festen Kunststoffpartikeln aus einem Polykondensat mittels eines Multirotationssystems anzugeben, mit dem eine Reduzierung der intrinsischen Viskosität im Verarbeitungsprozess gebremst oder vermieden wird oder mit dem die intrinsische Viskosität sogar erhöht wird.

Die Lösung nach der vorliegenden Erfindung besteht in einem Verfahren mit den Merkmalen des Anspruchs 1. Zur Durchführung des Verfahrens wird das weitergebildete Multirotationssystem nach Anspruch 8 vorgeschlagen.

Überraschenderweise wurde erfindungsgemäß ermittelt, dass eine deutliche Verbesserung bei der beschriebenen Problemstellung erreicht wird, indem über konventionelle Vorstellungen des Fachmanns zum Meteringprozess im Extruder hinweg gegangen wird. Nach üblicher fachmännischer Auffassung ist z. B. der Druck im Extruder eine wichtige Größe, die das Aufschmelzverhalten beeinflusst. Außerdem wurde bisher stets angestrebt, nur eine vollständig aufgeschmolzene und homogenisierte Kunststoffschmelze in die nächstfolgende Verarbeitungsstufe überzuleiten.

Die Erfindung geht hier einen deutlich anderen Weg. Ein Kernmerkmal des erfindungsgemäßen Verfahrens ist es, dass die Kunststoffschmelze beim Übergang aus der Einzugs- und Meteringzone noch deutlich sichtbare Anteile von nicht aufgeschmolzenen Kunststoffpartikeln enthält. Die Anteile des Feststoffs betragen mindestens 5%, vorzugsweise sogar mehr als 10%. Die Obergrenze sollte bei 40% bis 50% Feststoffanteil gewählt werden. Weil erfindungsgemäß toleriert wird, den Kunststoff nicht vollständig aufzuschmelzen und zu homogenisieren, bevor er entgast wird, kann der Wärmeeintrag in der Meteringzone reduziert werden, zum Beispiel durch reduzierte externe Beheizung, langsamere Rotation der Schnecke, kürzere Auslegung der ersten Extrudersektion und/oder interne Kühlung der Extruderschnecke.

Ein weiteres vorteilhaftes Merkmal besteht darin, dass die Aufschmelzung der noch festen Kunststoffpartikel maßgeblich durch eine Stoßerhitzung in der zweiten Extrudersektion erfolgt, und zwar kurz vor den Gehäuseöffnungen, an denen die Vakuumabsaugung angeschlossen ist. Die Stoßerhitzung wird bewirkt, indem die Kunststoffschmelze mit den noch festen Partikeln über die Antriebswellen der Satellitenschnecken geleitet wird. Diese kämmen in einer Verzahnung in der Gehäusebohrung. Dadurch, dass die Feststoffpartikel durch die Verzahnung geführt werden, entsteht eine hohe lokale Reibung und Quetschung, wodurch nicht nur die verbleibenden Feststoffpartikel sehr schnell plastifiziert werden, sondern auch die bereits aufgeschmolzenen Masseanteile in der Umgebung zusätzlich erhitzt werden. Da die Verzahnungen nicht den gesamten Umfang der Polyrotationseinheit belegen, wird auch nicht das komplette Volumen an Kunststoffschmelze durch die Verzahnungen geführt, sondern es bilden sich auch Strömungen über Bypässe daran vorbei. Die Wirkung der lokalen Stoßerhitzung erstreckt sich aber auch in die Nachbarbereiche der Verzahnungen.

Über die Festlegung der Länge der Antriebsritzel, insbesondere in Relation zur Gesamtlänge der Polyrotationseinheit bzw. zur Entgasungszone als dem verfahrenstechnisch relevanten Teil davon, kann das Ausmaß der Stoßerhitzung beeinflusst werden. Erfindungsgemäß wird also bevorzugt ein MRS-Extruder verwendet, bei dem das jeweils auf die Satellitenschnecke zu übertragende Drehmoment nur die untere Grenze für die Ritzellänge bildet, ansonsten die Ritzellänge aber deutlich länger als unter Festigkeitsgesichtspunkten notwendig gewählt werden kann, um die oben beschriebenen Effekte zu erreichen und zu verstärken. Als besonders geeignet haben sich Längenverhältnisse von 1:40 bis 1:6 erwiesen, wobei jeweils die Ritzellänge in Bezug zu der Länge der unmittelbar auf den Antrieb folgenden Entgasungszone gesetzt ist.

Die Stoßerhitzung findet unmittelbar vor dem Eintritt der Kunststoffschmelze in die Vakuum-Entgasungszone statt. Damit ist die Verweilzeit des deutlich erhitzten und nun vollständig aufgeschmolzenen Kunststoffs, die immer noch Feuchtigkeit enthält, bis zum Eintritt in die Entgasungszone vernachlässigbar kurz, so dass die Einwirkzeit der Feuchtigkeit auf die Kunststoffschmelze auf einen Bruchteil reduziert ist.

Schließlich setzt sich die Erfindung über die Ansicht hinweg, die Aufschmelzung und Homogenisierung von Kunststoff im Extruder müsse stets unter hohem Druck erfolgen. Tatsächlich besteht bei dem erfindungsgemäßen Verfahren ein hoher Druck nur im Bereich des Übergangskonus' zwischen der ersten und der zweiten Extrudersektion. Darauf folgt in räumlicher Nähe der verzahnte Antriebsbereich und dazu wiederum benachbart ist die Vakuumeinflusszone. Das bedeutet, dass der relativ hohe Staudruck, der noch am Übergangskonus anliegt, nach einem kurzen axialen Weg entlang der Extruderschnecke, der deutlich weniger als die Hälfte, insbesondere weniger als 20%, der Länge der Polyrotationseinheit ausmacht, bereits vollständig abgebaut ist. Schon im Bereich der Antriebsverzahnung der Satellitenschnecken, bei der die Stoßerhitzung stattfindet, ist der Druck in der Kunststoffschmelze fast vollständig abgebaut; zumindest ist er dort schon auf einen solchen Restdruck reduziert, dass er für das Plastifizierverhalten keine Bedeutung mehr hat. In diesem Sinne wird bei dem erfindungsgemäßen Verfahren eine "drucklose Plastifizierung" der zunächst in der Kunststoffschmelze mitgeführten Feststoffpartikel im Bereich der Verzahnung der Satellitenschnecken und den nachfolgenden Längenbereichen bis zum Eintritt in das Vakuumfenster bewirkt.

Verkürzt gesagt, wird in der ersten Extrudersektion quasi eine unterkühlte Kunststoffschmelze erzeugt, weil dort eben noch nicht alle Volumenanteile bis über die Kunststoffschmelzetemperatur des verarbeiteten Kunststoffs erhitzt worden sind. Die unterkühlte Kunststoffschmelze wird erst sehr kurz vor dem Eintritt in die Vakuumzone soweit nacherhitzt, dass die restlichen Partikel aufschmelzen und dabei die gespeicherte Restfeuchte freigeben. Das aus den restlichen Partikeln verdampfende Wasser wird dann unmittelbar danach in der Vakuumzone abgesaugt, bevor es überhaupt seine hydrolysierende Wirkung entfalten kann.

Damit werden folgende wesentlichen Effekte erreicht, die bei Durchführung des Verfahrens nach der Erfindung den hydrolytischen Abbau der Kunststoffschmelze wie auch die Schädigung der Kunststoffschmelze durch Scherung während der Verarbeitung stark reduzieren:
- Soweit beim Aufschmelzen in der ersten Extrudersektion Wasser frei wird, kann es seine schädigende Wirkung nur auf einem niedrigen Temperaturniveau entfalten, weil die Temperatur dort ja bewusst an der Schwelle zur Schmelztemperatur gehalten wird. Die Hydrolyse wird somit zumindest gebremst.
- Um den Wärmeeintrag zu reduzieren, kann die Schneckendrehzahl in der ersten Extrudersektion klein gehalten werden, hierdurch wird der nachteilige Effekt durch Scherung ebenfalls vermindert.
- Ein Teil der in den Kunststoffpartikeln enthaltenen Feuchtigkeit wird in der ersten Extrudersektion noch gar nicht freigesetzt, sondern über die verbleibenden Feststoffe als Vehikel in die nächste Sektion transportiert. Dort erfolgen Freisetzung und Absaugung nahezu zeitgleich.
- Zwar wird die Kunststoffschmelze bei der Durchleitung durch die Antriebsverzahnung auch stark geschert. Weil aber unmittelbar danach der Vakuumeinfluss einsetzt, wodurch Wasser als Kondensat entfernt wird, und weil zudem die Temperatur ausreichend hoch ist, kann die Polykondensationsreaktion einsetzen, die zur Molekülkettenverlängerung führt und die Beschädigungen wieder repariert.

Damit das erfindungsgemäße Verfahren in der beschriebenen Weise durchführbar ist und die vorteilhaften Wirkungen erzielt werden, gibt es insbesondere eine Stellgröße, die gezielt überwacht und ggf. nachgestellt werden muss. Dabei handelt es sich um die Spaltweite am Übergangskonus bzw. den damit zusammenhängenden Staudruck. Bei einem zu engen Spalt steigt der Staudruck soweit an, dass die Förderleistung der Extruderschnecke in der ersten Extrudersektion nicht ausreicht, um einen konstanten Volumenstrom in die zweite Extrudersektion überzuleiten. In diesem Falle stiege die Verweilzeit in der ersten Extrudersektion stark an, was es gerade zu vermeiden gilt.

Ein zu weiter Spalt hingegen erhöht die Fließgeschwindigkeit in der ersten Extrudersektion. Damit würden aber zu hohe Feststoffanteile in die folgende Sektion geschwemmt, was den dortigen Antrieb der Satellitenschnecken überlasten und zu Verstopfungen oder sogar Beschädigungen der Verzahnungen führen könnte.

Ziel der erfindungsgemäßen Verfahrensführung ist es also, einerseits soviel Feststoff wie möglich überzuleiten, um die Feuchtigkeit darin quasi gekapselt in die nächste Sektion zu transportieren und erst ganz spät, nah bei der Absaugung, frei zu setzen. Andererseits soll aber der Feststoffgehalt niedrig genug gehalten werden, damit die Ritzel nicht blockiert werden oder sogar nicht aufgeschmolzene Partikel durchgeleitet werden und das Multirotationssystem austragsseitig verlassen.

Die passende Spaltweite des Konusspalts kann in Abhängigkeit von der zu erwartenden Viskosität der Kunststoffschmelze am Übergangskonus konstruktiv vorgegeben werden bzw. vor Durchführung des Verfahrens fest eingestellt werden.

Bei einem zur Durchführung des Verfahrens bevorzugten Multirotationssystem mit den Merkmalen des Anspruchs 8 ist die Spaltweite über eine axiale Verschiebung der Extruderschnecke gegenüber dem Gehäuse während der Verfahrensdurchführung einstellbar.

Dazu kann eine aktive Regelungseinheit vorgesehen sein, die in Abhängigkeit von einem an einem Drucksensor vor dem Übergangskonus gemessenen Druck einen Aktor wie einen Hydraulikzylinder ansteuert und die Extruderschnecke verschiebt. Bei hohem Druck wird die Extruderschnecke in Fließrichtung leicht nach vorn geschoben, so dass sich der Spalt weitet. Fällt der Druck zu weit ab, wird die gegenläufige Bewegung erzwungen.

Der Druck am Übergangskonus eines Multirotationssystems ist in der Praxis stark schwankend und erreicht Werte von 20 bar bis 150 bar. Im angestrebten Normalbetrieb liegt der Druck bevorzugt zwischen 40 bar und 60 bar.

Bezogen auf das Beispiel eines Multirotationssystems mit einem Durchmesser von 130 mm bei der Einzugsschnecke und einem Rotordurchmesser von 225 mm bei der Polyrotationseinheit beträgt die Spaltweite typischerweise z. B. 5 bis 10 mm, wobei ein zusätzlicher Verstellweg zu beiden Seiten vorgesehen ist, um auf sich dynamisch einstellende Betriebszustände reagieren zu können.

Eine einfache, aber effektive Maßnahme ist es, die Extruderschnecke über wenigstens ein Federelement am Gehäuse abzustützen, insbesondere über eine Tellerfeder. Das Federelement wird auf Zug belastet, denn die Extruderschnecke stützt sich bei einem Multirotationssystem wegen des Drucks an der Spitze der Meteringzone, welche auf den Konus wirkt, stets zum Eintrag hin ab. Dadurch wird die Extruderschnecke nämlich nicht, wie sonst in Einschneckenextrudern üblich, zum Eintrag hin gedrückt, sondern zum Austrag. Zu berücksichtigen ist weiterhin, dass das Federelement nur außerhalb der Kunststoffschmelze führenden Teile angeordnet sein kann und daher nicht auf der Austragsseite positionierbar ist. Vielmehr muss das Federelement beim Antrieb für die Rotation der Extruderschnecke positioniert sein und diese quasi am Gehäuse festhalten, wobei es auf Zug beansprucht. Das Federelement liegt zwischen einem feststehenden und einem mitrotierenden Teil. Das feststehende Teil ist über ein Gewinde mit dem Getriebe verbunden, mit diesem Gewinde lässt sich somit die gesamte Schneckenkonstruktion axial verschieben. Steigt der Staudruck am Übergangskonus zwischen den Extrudersektionen eins und zwei zu weit an, verschiebt sich die Extruderschnecke axial nach vorn, so dass sich der Stauspalt weitet. Umgekehrt führt ein Absinken des Staudrucks aufgrund der Federkraft wieder zu einer Verengung des Spaltes. Damit stellt sich ein Gleichgewicht zwischen der Federkraft und der durch den Staudruck am Überganskonus bewirkten Vortriebskraft ein. Aufgrund der hohen Massen und der Viskosität der Kunststoffschmelze bildet sich ein Feder-Dämpfer-System, das ohne zusätzliche Dämpfungselemente auskommt und das ausreichend träge ist, um Schwingungen zu vermeiden.

Die Erfindung wird nachfolgend mit Bezug auf die Zeichnungen näher erläutert. Die Figuren zeigen im Einzelnen:
- Fig. 1: einen Ausschnitt eines Multirotationssystems im Schnitt; und
- Fig. 2: eine Extruderschnecke in seitlicher Ansicht sowie einen Druck- und Temperaturverlauf über deren Länge.

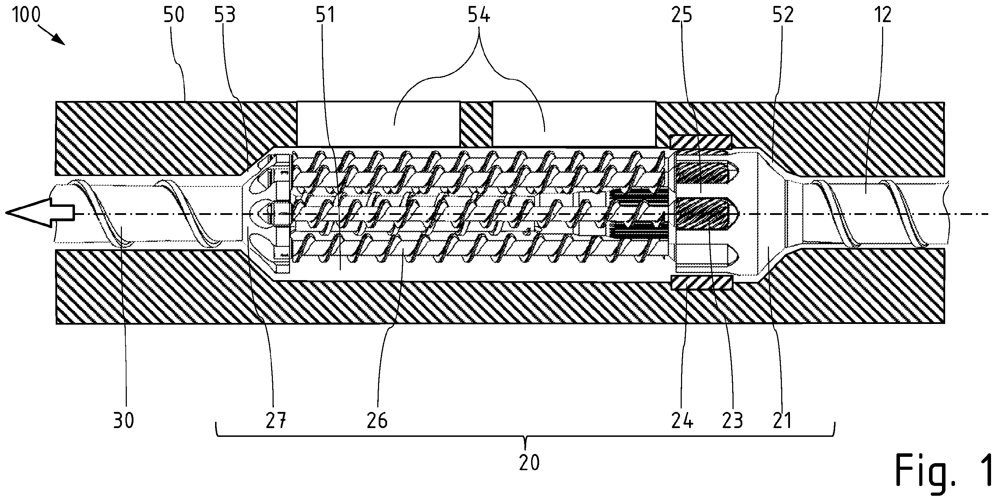

In Figur 1 ist ein Ausschnitt eines an sich bekannten Multirotationssystem 100 dargestellt. In einer Gehäuseausnehmung 51 in einem Gehäuse 50 ist eine Extruderschnecke angeordnet, die sich in verschiedene Zonen teilt. Zwischen einer Meteringzone 12, die der Homogenisierung der zuvor eingezogenen und zumindest teilweise aufgeschmolzenen Kunststoffpartikel dient, und einer Austragszone 30, in der die vollständig behandelte Kunststoffschmelze abgefördert wird, ist eine Polyrotationseinheit 20 angeordnet. Diese besitzt folgende wesentliche Merkmale:
- Am Übergang von der Meteringzone 12 ist ein Übergangskonus 21 ausgebildet; zum Gehäuse 50 hin bildet sich ein Konusspalt 52.
- Es folgt eine Antriebszone, in welcher Ritzel 23 von Satellitenschnecken 26 in einem mit dem Gehäuse verbundenen Drehkranz 24 mit Innenverzahnung 24 laufen. Zwischen den Ritzeln 23 befinden sich Durchlässe 25.
- Die Satellitenschnecken 26 rotieren in sich, während sich die gesamte Extruderschnecke dreht, und damit auch der Rotor, in dem sie gelagert sind. Sie erstrecken sich über den wesentlichen Teil der Länge der Polyrotationseinheit 20 und sind an Gehäusefenstern 54 vorbeigeführt, an denen ein Vakuum angelegt wird.
- Die Satellitenschnecken 26 sind mit ihrer vorderen Spitze in einem Lagerträger 27 gelagert, bei dem wieder ein Konus vorgesehen ist, um von dem erweiterten Durchmesser der Polyrotationseinheit 20 auf den kleineren Durchmesser der Austragszone 30 zurückzuführen. Entsprechend ist dort ein weiterer Konusspalt 53 ausgebildet.

Der konstruktive Aufbau des Multirotationssystems 100 ist insoweit bekannt, unterscheidet sich aber nach der Erfindung darin, dass die Weite des Konusspalts 52 durch eine axiale Verschiebung der gesamten Extruderschnecke gegenüber dem Gehäuse 50 einstellbar ist, um die Spaltweite gezielt für eine Druckregelung zu benutzen und darüber den Anteil von Feststoffanteilen, die noch nicht aufgeschmolzen sind und über den Übergangskonus 21 ausgeschwemmt werden, zu beeinflussen.

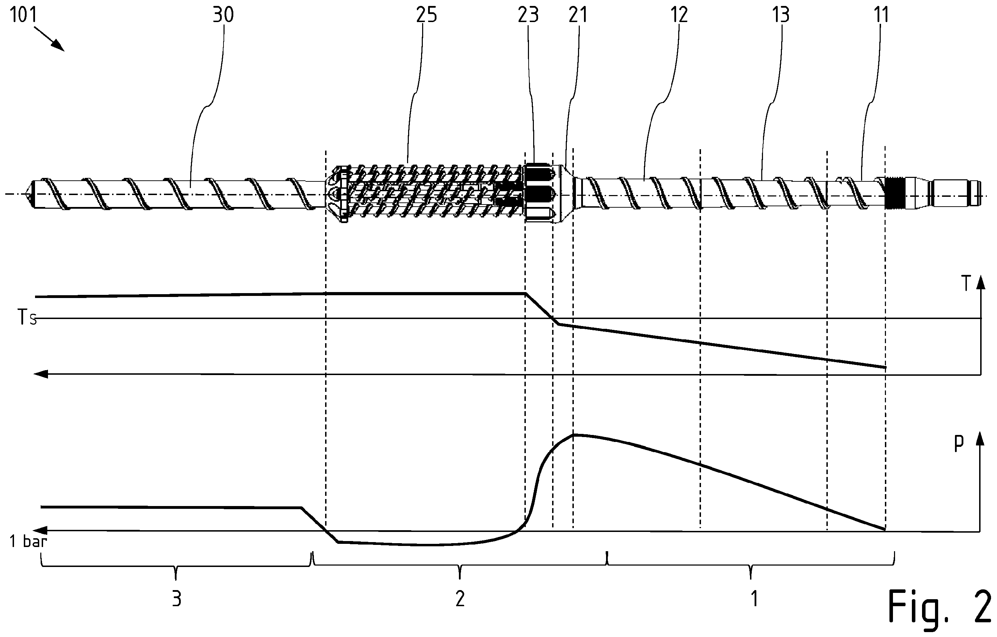

Für das Verständnis des erfindungsgemäßen Verfahrens ist in Figur 2 der qualitative Verlauf des Drucks p und der Temperatur T gegenüber der axialen Erstreckung der Extruderschnecke 101 mit ihren verschiedenen Sektionen 1, 2, 3 dargestellt.

In einer Einzugs- und Meteringextrudersektion 1 wird zunächst in einer Einzugszone 11 Feststoff eingezogen. In einer Kompressionszone 13 wird ein Druck aufgebaut. In der folgenden Meteringzone 12 wird der eingezogene Kunststoff wenigstens teilweise aufgeschmolzen und homogenisiert. Gemäß der Erfindung wird aber eben nur ein Teil des Feststoffs aufgeschmolzen und homogenisiert, während ein anderer Teil von 5% bis 50%, insbesondere 10% bis 40%, als Feststoff in der Kunststoffschmelze verbleibt.

Im Temperaturverlauf von Figur 2 ist eine mittlere Massentemperatur dargestellt, also ungefähr das Mittel der jeweiligen Temperatur von Anteilen des aufgeschmolzenen Kunststoffs, die in direktem Kontakt mit der Extruderschnecke sind, und solchen Anteilen, die Kontakt zur Gehäuseinnenwand haben. Darin sind aber nach der Erfindung noch feste Masseanteile mit entsprechend niedrigerer Kerntemperatur enthalten, so dass im Ergebnis die mittlere Massetemperatur des verarbeiteten Kunststoffs in der Einzugs- und Metering-Extrudersektion 1 unterhalb einer Schmelztemperatur Ts liegt.

Das Verfahren ist insbesondere für die Aufbereitung von Polyester vorteilhaft. Hierbei liegt die Schmelztemperatur, je nach Kristallisationsgrad, bei 235°C bis 260°C.

Um eine solchermaßen unterkühlte Kunststoffschmelze zu erreichen, ist die Extruderschnecke 101 zumindest in der Einzugs- und Metering-Extrudersektion 1 gekühlt. Als Wärmeträger wird hierzu insbesondere Öl mit einer Vorlauftemperatur zwischen 90° und 130°C verwendet. Zugleich wird die in Figur 2 nicht dargestellte Gehäusewand geheizt, beispielsweise auf 280°C. Die gleichzeitige Beheizung und Kühlung in derselben Sektion 1 ist kein Widerspruch. Die interne Kühlung dient dazu, die durch Rotation der Extruderschnecke 101 eingetragene teilweise Wärmeleistung abzuführen, die meist an dieser Stelle höher ausfällt, als für die Verfahrensführung benötigt. Denn die Schneckendrehzahl muss auf die in der Multiwellen-Extrudersektion 2 benötigte Drehzahl abgestimmt sein und kann somit für die Extrudersektion 1 nicht reduziert werden. Die Beheizung am Gehäuse hingegen dient dazu, unabhängig von dem Anteil der Feststoffbefrachtung der geförderten Kunststoffschmelze einen Schmierfilm aus geschmolzenem Kunststoff zu erzeugen.

Die Temperatur steigt aufgrund des Wärmeeintrags durch Rotation der Extruderschnecke 101 beim Übergang in die Multiwellen-Extrudersektion 2 leicht an, wobei aber die mittlere Temperatur des geförderten Kunststoffvolumens vorzugsweise immer noch leicht unterhalb der Schmelztemperatur Ts liegt. Erst in der Antriebszone, also bei Durchleitung durch den Bereich der Antriebsritzel 23, steigt die Temperatur sprunghaft an, und zwar deutlich bis über die Kunststoffschmelzetemperatur T_{S}. Der Kunststoff wird also erst genau dort vollständig aufgeschmolzen und auf ein Temperaturniveau gebracht, wo Feuchtigkeit und Kontaminationen mittels des anliegenden Vakuums abgesaugt werden können und durch Förderung der Polykondensationsreaktion die intrinsische Viskosität erhöht werden kann.

Der weitere Temperaturverlauf in der Austrags-Extrudersektion 3, hinter der Multiwellen-Extrudersektion 2, ist für die Qualität der Verarbeitung nicht mehr wichtig, liegt aber konstant oberhalb der Schmelztemperatur T_{S}.

Außerdem ist in Figur 2 der Druckverlauf der Kunststoffschmelze im Extruder über der Länge der Extruderschnecke 101 aufgetragen. Gezeigt ist das Beispiel einer Extruderschnecke 101, bei der die Einzugszone 11 nicht genutet ist, so dass sich ein von dort erst allmählich bis zum Übergangskonus 21 ansteigender Druck ergibt.

Hinter dem Übergangskonus 21 sind keine Förderelemente mehr an der Extruderschnecke 101 vorhanden, so dass sich sofort ein Druckabfall einstellt. Der Druck fällt bis auf ein Vakuumniveau von nahezu null bei den Satellitenschnecken 26 ab. In der in Strömungsrichtung unmittelbar davor liegenden Antriebszone mit den Ritzeln 23 besteht also schon kein signifikanter Druck mehr, so dass die Stoßerhitzung der Kunststoffmasse, die dort stattfindet und die die Plastifizierung der restlichen Feststoffanteile bewirkt, quasi drucklos erfolgt.

## Patentansprüche

1. Verfahren zum Aufbereiten von festen Kunststoffpartikeln aus einem Polykondensat mittels eines Multirotationssystems (100), mit wenigstens folgenden Schritten:
a) Einzug der Kunststoffpartikel und zumindest teilweises Aufschmelzen der Kunststoffpartikel in einer ersten Extrudersektion (1) mit wenigstens einer in einer Gehäuseausnehmung (51) eines Gehäuses (50) rotierenden Extruderschnecke (101);
b) Überleitung der zumindest teilweise aufgeschmolzenen Kunststoffmasse, in eine zweite Extrudersektion (2), welche als Multischnecken-Extrudersektion (2) mit einer Polyrotationseinheit (20) und mehreren darin rotierenden Satellitenschnecken (26) ausgebildet ist, wobei der Durchmesser der Polyrotationseinheit (20) gegenüber dem Schneckendurchmesser der ersten Extrudersektion (1) vergrößert ist und wobei zwischen den Extrudersektionen (1, 2) ein Übergangskonus (21) ausgebildet ist und gegenüber dem Gehäuse (50) ein Konusspalt (52) ausgebildet ist;
c) Weiterleitung der in der Antriebszone (23, 24, 25) vollständig aufgeschmolzenen Kunststoffmasse durch eine Entgasungszone, in welcher ein Vakuum anliegt;
d) Abführen flüchtiger Bestandteile aus der Kunststoffschmelze in der Entgasungszone;
e) Überführen der Kunststoffschmelze in eine Austrags-Extrudersektion (3).
**dadurch gekennzeichnet, dass**
- im Schritt b) die teilweise aufgeschmolzene Kunststoffmasse als unterkühlte Kunststoffschmelze zwischen 5 Vol.-% und 50 Vol.-% nicht aufgeschmolzene und nicht entfeuchtete Kunststoffpartikel enthält,
- dass die verbliebenen Kunststoffpartikel mittels Durchleitung wenigstens von Teilen der Kunststoffmasse durch eine in Strömungsrichtung hinter dem Übergangskonus (21) befindliche Antriebszone (23, 24) mit offen liegenden Antriebsritzeln (23) der Satellitenschnecken (26); drucklos plastifiziert werden und
- dass die unterkühlte Kunststoffschmelze sehr kurz vor dem Eintritt in die Vakuumzone soweit nacherhitzt wird, dass die restlichen Kunststoffpartikel aufschmelzen und dabei die gespeicherte Restfeuchte freigeben.

2. Verfahren nach Anspruch 1, **dadurch gekennzeichnet, dass** die Aufschmelzung der festen Kunststoffpartikel durch eine Stoßerhitzung beim Durchleiten durch die Antriebszone (23, 24, 25) bewirkt wird.

3. Verfahren nach Anspruch 1 oder 2, **dadurch gekennzeichnet, dass** die teilweise aufgeschmolzenen Kunststoffmasse bei der Überleitung von der ersten in die zweite Extrudersektion (1, 2) zwischen 10 Vol.-% und 40 Vol.-% nicht aufgeschmolzene Restpartikel enthält.

4. Verfahren nach einem der Ansprüche 1 bis 3, **dadurch gekennzeichnet, dass** die Einzugs- und Meteringzone (10, 12) der Extruderschnecke (10) durch ein in deren Innerem strömendes Fluid temperiert wird, das eine Vorlauftemperatur besitzt, die zwischen der Glasübergangstemperatur und der Schmelztemperatur Ts des Kunststoffs, aus dem die Kunststoffpartikel bestehen, liegt.

5. Verfahren nach einem der Ansprüche 1 bis 4, **dadurch gekennzeichnet, dass** der Füllgrad in der Multischnecken-Extrudersektion (2) kleiner 100 % ist.

6. Verfahren nach einem der Ansprüche 1 bis 5, **dadurch gekennzeichnet**, **dadurch gekennzeichnet, dass** die Weite eines Konusspalts (52) zwischen dem Übergangskonus (21) der Extruderschnecke (101) und der Gehäuseausnehmung (51) über eine Axialverschiebung der Extruderschnecke (101) gegenüber dem Gehäuse (50) eingestellt wird.

7. Verfahren nach Anspruch 6, **dadurch gekennzeichnet, dass** die Weite des Konusspalts (52) in Abhängigkeit vom Druck am Ende der Meteringzone (12) der ersten Extrudersektion (1) eingestellt wird, wobei ein hoher Druck zu einer Öffnung des Konusspalts (52) und ein niedriger Druck zu einer Verengung des Konusspalts (52) führt.

8. Verfahrens nach Anspruch 6 oder 7, **dadurch gekennzeichnet, dass** die axial verschiebbar angeordnete Extruderschnecke an einem stromaufwärts angeordnete Federelement am Gehäuse abgestützt ist und die Extruderschnecke durch die Viskosität der ^{a}Schmelze, in der sie gelagert ist, gedämpft wird.

9. Multirotationssystem (100) zur Durchführung des Verfahrens nach wenigstens einem der vorhergehenden Ansprüche, mit wenigstens einem Gehäuse (50) mit einer Gehäuseausnehmung (51), die in einer eine Entgasungszone wenigstens eine Gehäuseöffnung (54) aufweist, in welcher ein Vakuum anliegt, und mit einer in der Gehäuseausnehmung (51) rotierbaren Extruderschnecke (101), wobei das Multirotationssystem (100) wenigstens umfasst:
- eine erste Extrudersektion (1) mit wenigstens einer Einzugszone (11) Meteringzone (12) auf der Extruderschnecke (101);
- eine zweite Extrudersektion (2), welche als Multischnecken-Extrudersektion (2) mit einer Polyrotationseinheit (20) und mehreren darin rotierenden Satellitenschnecken (26) ausgebildet ist, wobei der Durchmesser der Polyrotationseinheit (20) gegenüber dem Schneckendurchmesser in der ersten Extrudersektion (1) vergrößert ist
- einen zwischen den Extrudersektionen (1, 2), auf der Extruderschnecke (101) ausgebildeten Übergangskonus (21), wobei zwischen dem Übergangskonus (21) und der Gehäuseausnehmung (51) ein Konusspalt (52) ausgebildet ist;
- eine in Strömungsrichtung hinter dem Übergangskonus (21) befindliche Antriebszone (23, 24) mit offen liegenden Antriebsritzeln (23) der Satellitenschnecken (26);
- eine Austrags-Extrudersektion (3).
**dadurch gekennzeichnet, dass** der Konusspalt (52) mittels axialer Verschiebung der Extruderschnecke (101) gegenüber dem Gehäuse (50) einstellbar ist.

10. Multirotationssystem (100) nach Anspruch 9, **dadurch gekennzeichnet, dass** das Verhältnis der Länge der Ritzel (23) der Satellitenschnecken (25) zur axialen Erstreckung der Entgasungszone 1:40 bis 1:6 beträgt.

11. Multirotationssystem (100) nach Anspruch 9 oder 10, **gekennzeichnet durch**:
- wenigstens einen Drucksensor, der vor dem Übergangskonus (21) in der Meteringzone (12) angeordnet ist;
- eine Stellvorrichtung, über welche die Extruderschnecke (101) axial gegenüber dem Gehäuse (50) verschiebbar ist;
- eine Regelungseinheit, welche mit dem Drucksensor und der Stellvorrichtung verbunden ist.

12. Multirotationssystem (100) nach einem der vorhergehenden Ansprüche, **dadurch gekennzeichnet, dass** stromaufwärts der Einzugszone (11) ein Federelement vorgesehen ist, über welches die Extruderschnecke (101) am Gehäuse (50) abgestützt ist.

13. Multirotationssystem (100) nach einem der vorhergehenden Ansprüche, **dadurch gekennzeichnet, dass** die Extruderschnecke (101) zumindest in der ersten Extrudersektion (1) durch ein in einem inneren Fließkanal fließendes Fluid temperierbar ist.

14. Multirotationssystem (100) nach einem der vorhergehenden Ansprüche, **dadurch gekennzeichnet, dass** das Gehäuse (50) zumindest in der ersten und zweiten Extrudersektion (1) temperierbar ist.

15. Multirotationssystem (100) nach einem der vorhergehenden Ansprüche, **dadurch gekennzeichnet, dass** eine Austragszone (30) der Extruderschnecke (101) einen gegenüber der Polyrotationseinheit (20) reduzierten Durchmesser aufweist.

## Claims

1. Method for processing solid plastics particles from a polycondensate by means of a multi-rotation system (100), having at least the following steps:
a) drawing in of the plastics particles and at least partial melting of the plastics particles in a first extruder section (1) with at least one extruder screw (101) rotating in a housing recess (51) of a housing (50);
b) transfer of the at least partially melted plastics composition into a second extruder section (2), which is designed as a multi-screw extruder section (2) with a poly-rotation unit (20) and a plurality of satellite screws (26) rotating therein, the diameter of the poly-rotation unit (20) being increased compared with the screw diameter of the first extruder section (1) and a transition cone (21) being formed between the extruder sections (1, 2) and a conical gap (52) being formed in relation to the housing (50);
c) forwarding of the plastics composition which has been completely melted in the drive zone (23, 24, 25) through a degassing zone in which a vacuum is applied;
d) removal of volatile constituents from the plastics melt in the degassing zone;
e) transfer of the plastics melt into a discharge extruder section (3),
**characterized in that**,
- in step b), the partially melted plastics composition as supercooled plastics melt contains between 5% by volume and 50% by volume of non-melted and non-dehumidified plastics particles,
- **in that** the remaining plastics particles are subjected to pressureless plasticization by at least parts of the plastics composition being passed through a drive zone (23, 24) which is located downstream of the transition cone (21) in a flow direction and which has exposed drive pinions (23) of the satellite screws (26), and
- **in that**, very shortly before entering the vacuum zone, the supercooled plastics melt is reheated to such an extent that the remaining plastics particles melt and thereby release the stored residual moisture.

2. Method according to Claim 1, **characterized in that** the solid plastics particles are melted by shock heating when they are passed through the drive zone (23, 24, 25).

3. Method according to Claim 1 or 2, **characterized in that** the partially melted plastics composition contains between 10% by volume and 40% by volume of non-melted residual particles when it is transferred from the first to the second extruder section (1, 2).

4. Method according to one of Claims 1 to 3, **characterized in that** the feed and metering zone (10, 12) of the extruder screw (10) is temperature-controlled by a fluid flowing in the interior thereof which has an supply temperature that lies between the glass transition temperature and the melting temperature T_{S} of the plastic of which the plastics particles are composed.

5. Method according to one of Claims 1 to 4, **characterized in that** the filling level in the multi-screw extruder section (2) is less than 100%.

6. Method according to one of Claims 1 to 5, characterized **characterized in that** the width of a conical gap (52) between the transition cone (21) of the extruder screw (101) and the housing recess (51) is adjusted via an axial displacement of the extruder screw (101) in relation to the housing (50).

7. Method according to Claim 6, **characterized in that** the width of the conical gap (52) is adjusted as a function of the pressure at the end of the metering zone (12) of the first extruder section (1), a high pressure leading to an opening of the conical gap (52) and a low pressure leading to a narrowing of the conical gap (52).

8. Method according to Claim 6 or 7, **characterized in that** the axially displaceably arranged extruder screw is supported on an upstream spring element on the housing and the extruder screw is damped by the viscosity of the ^{a}melt in which it is mounted.

9. Multi-rotation system (100) for carrying out the method according to at least one of the preceding claims, having at least one housing (50) with a housing recess (51) which has at least one housing opening (54) in a a degassing zone in which a vacuum is applied, and with an extruder screw (101) which can be rotated in the housing recess (51), the multi-rotation system (100) comprising at least:
- a first extruder section (1) with at least one feed zone (11) metering zone (12) on the extruder screw (101);
- a second extruder section (2), which is designed as a multi-screw extruder section (2) with a poly-rotation unit (20) and a plurality of satellite screws (26) rotating therein, the diameter of the poly-rotation unit (20) being increased compared with the screw diameter in the first extruder section (1);
- a transition cone (21) which is formed between the extruder sections (1, 2) on the extruder screw (101), a conical gap (52) being formed between the transition cone (21) and the housing recess (51);
- a drive zone (23, 24) which is located downstream of the transition cone (21) in the flow direction and which has exposed drive pinions (23) of the satellite screws (26);
- a discharge extruder section (3),
**characterized in that** the conical gap (52) can be adjusted by means of axial displacement of the extruder screw (101) in relation to the housing (50).

10. Multi-rotation system (100) according to Claim 9, **characterized in that** the ratio of the length of the pinions (23) of the satellite screws (25) to the axial extent of the degassing zone is 1:40 to 1:6.

11. Multi-rotation system (100) according to Claim 9 or 10, **characterized by**:
- at least one pressure sensor which is arranged upstream of the transition cone (21) in the metering zone (12) ;
- an adjusting device by means of which the extruder screw (101) can be displaced axially in relation to the housing (50);
- a control unit which is connected to the pressure sensor and the actuating device.

12. Multi-rotation system (100) according to one of the preceding claims, **characterized in that** provided upstream of the feed zone (11) is a spring element via which the extruder screw (101) is supported on the housing (50).

13. Multi-rotation system (100) according to one of the preceding claims, **characterized in that** the extruder screw (101) can be temperature-controlled at least in the first extruder section (1) by a fluid flowing in an inner flow channel.

14. Multi-rotation system (100) according to one of the preceding claims, **characterized in that** the housing (50) can be temperature-controlled at least in the first and second extruder sections (1).

15. Multi-rotation system (100) according to one of the preceding claims, **characterized in that** a discharge zone (30) of the extruder screw (101) has a diameter that is reduced compared with the poly-rotation unit (20).

## Revendications

1. Procédé de traitement de particules de matière plastique solide à partir d'un polycondensat au moyen d'un système multirotation (100), comprenant au moins les étapes suivantes :
a) introduction des particules de matière plastique et fusion au moins partielle des particules de matière plastique dans une première section d'extrudeuse (1) comportant au moins une vis sans fin d'extrudeuse (101) tournant dans un évidement (51) d'un boîtier (50) ;
b) transfert de la masse de matière plastique au moins partiellement fondue dans une deuxième section d'extrudeuse (2) qui est conçue sous la forme d'une section d'extrudeuse multi-vis (2) équipée d'une unité de polyrotation (20) et de plusieurs vis satellites (26) tournant à l'intérieur de celle-ci, le diamètre de l'unité de polyrotation (20) étant plus grand que le diamètre de la vis sans fin de la première section d'extrudeuse (1) et un cône de transition (21) étant formé entre les sections d'extrudeuse (1, 2), et un espace conique (52) étant formé par rapport au boîtier (50) ;
c) acheminement de la masse de matière plastique entièrement fondue dans la zone d'entraînement (23, 24, 25) à travers une zone de dégazage sous vide ;
d) évacuation des composants volatils de la matière plastique fondue dans la zone de dégazage ;
e) transfert de la matière plastique fondue dans une section d'extrudeuse de décharge (3),
**caractérisé en ce que**
- à l'étape b), la masse de matière plastique partiellement fondue contient, sous forme de matière plastique fondue sous-refroidie, entre 5% en volume et 50% en volume de particules de matière plastique non fondues et non déshumidifiées,
- **en ce que** les particules de matière plastique restantes sont plastifiées sans pression par passage d'au moins une partie de la masse de matière plastique à travers une zone d'entraînement (23, 24), située en aval du cône de transition (21) dans le sens d'écoulement et comportant des pignons d'entraînement (23) exposés des vis sans fin satellites (26) ; et
- la masse de matière plastique en fusion surfondue est réchauffée très peu avant son entrée dans la zone de vide, de telle sorte que les particules de matière plastique restantes fondent et libèrent ainsi l'humidité résiduelle accumulée.

2. Procédé selon la revendication 1, **caractérisé en ce que** la fusion des particules de matière plastique solides est provoquée par un chauffage par choc lors du passage à travers la zone d'entraînement (23, 24, 25).

3. Procédé selon la revendication 1 ou la revendication 2, **caractérisé en ce que** la masse de matière plastique partiellement fondue contient, lors du passage de la première à la deuxième section d'extrudeuse (1, 2), entre 10% en volume et 40% en volume de particules résiduelles non fondues.

4. Procédé selon l'une des revendications 1 à 3, **caractérisé en ce que** la zone d'alimentation et de dosage (10, 12) de la vis d'extrudeuse (10) est tempérée par un fluide s'écoulant à l'intérieur de celle-ci, qui présente une température d'alimentation comprise entre la température de transition vitreuse et la température de fusion T_{S} de la matière plastique dont sont constituées les particules de matière plastique.

5. Procédé selon l'une des revendications 1 à 4, **caractérisé en ce que** le degré de remplissage dans la section d'extrudeuse multi-vis (2) est inférieur à 100%.

6. Procédé selon l'une des revendications 1 à 5, caractérisé **caractérisé en ce que** la largeur d'un interstice conique (52) entre le cône de transition (21) de la vis d'extrudeuse (101) et l'évidement du boîtier (51) est réglée par un déplacement axial de la vis d'extrudeuse (101) par rapport au boîtier (50).

7. Procédé selon la revendication 6, **caractérisé en ce que** la largeur de l'espace conique (52) est réglée en fonction de la pression à l'extrémité de la zone de dosage (12) de la première section d'extrudeuse (1), une pression élevée entraînant une ouverture de l'espace conique (52) et une pression faible entraînant un rétrécissement de l'espace conique (52).

8. Procédé selon la revendication 6 ou la revendication 7, **caractérisé en ce que** la vis d'extrudeuse agencée de manière axialement mobile, est soutenue par un élément élastique agencé en amont sur le boîtier et **en ce que** la vis d'extrudeuse est amortie par la viscosité de la ^{a}masse fondue dans laquelle elle est plongée.

9. Système multirotation (100) pour la mise en œuvre du procédé selon au moins une des revendications précédentes, comprenant au moins un boîtier (50) présentant un évidement (51) qui présente, dans une une zone de dégazage, au moins une ouverture (54) dans laquelle règne un vide, et comprenant une vis d'extrudeuse (101) apte à tourner dans l'évidement (51) du boîtier, le système multirotation (100) comprenant au moins :
- une première section d'extrudeuse (1) comprenant au moins une zone d'alimentation (11) et une zone de dosage (12) sur la vis d'extrudeuse (101) ;
- une deuxième section d'extrudeuse (2) qui est conçue sous la forme d'une section d'extrudeuse multi-vis (2) avec une unité de polyrotation (20) et plusieurs vis satellites (26) rotatives à l'intérieur, le diamètre de l'unité de polyrotation (20) étant plus grand que le diamètre de la vis située dans la première section d'extrudeuse (1) ;
- un cône de transition (21) formé entre les sections d'extrudeuse (1, 2), sur la vis d'extrudeuse (101), un interstice conique (52) étant formé entre le cône de transition (21) et l'évidement du boîtier (51) ;
- une zone d'entraînement (23, 24) située en aval du cône de transition (21) dans le sens d'écoulement, avec des pignons d'entraînement (23) exposés des vis sans fin satellites (26) ;
- une section d'extrudeuse de décharge (3), **caractérisé en ce que** l'espace conique (52) est réglable par déplacement axial de la vis d'extrudeuse (101) par rapport au boîtier (50).

10. Système multirotation (100) selon la revendication 9, **caractérisé en ce que** le rapport entre la longueur des pignons (23) des vis sans fin satellites (25) et l'extension axiale de la zone de dégazage est compris entre 1:40 et 1:6.

11. Système multirotation (100) selon la revendication 9 ou la revendication 10, **caractérisé par** :
- au moins un capteur de pression agencé en amont du cône de transition (21) dans la zone de dosage (12) ;
- un dispositif de réglage permettant de déplacer axialement la vis d'extrudeuse (101) par rapport au boîtier (50) ;
- une unité de commande reliée au capteur de pression et au dispositif de réglage.

12. Système multirotation (100) selon l'une des revendications précédentes, **caractérisé en ce qu'**en amont de la zone d'alimentation (11) est prévu un élément élastique par lequel la vis d'extrudeuse (101) est soutenue sur le boîtier (50).

13. Système multirotation (100) selon l'une des revendications précédentes, **caractérisé en ce que** la température de la vis d'extrudeuse (101) est apte à être régulée au moins dans la première section d'extrudeuse (1) par un fluide s'écoulant dans un canal d'écoulement interne.

14. Système multirotation (100) selon l'une des revendications précédentes, **caractérisé en ce que** la température du boîtier (50) est apte à être régulée au moins dans la première et la deuxième section d'extrudeuse (1).

15. Système multirotation (100) selon l'une des revendications précédentes, **caractérisé en ce qu'**une zone de décharge (30) de la vis d'extrudeuse (101) présente un diamètre réduit par rapport à l'unité de polyrotation (20).
